# EUROPÄISCHE PATENTANMELDUNG

(11) **EP 0 838 634 A2**
(43) Veröffentlichungstag der Anmeldung: **29.04.1998**
(21) Anmeldenummer: 97100438.7
(22) Anmeldetag: 14.01.1997
(51) Int. Cl.: F23D 14/04

(54) **Gas-Kombi-Bräter, insbesondere Wurstbräter**

(30) Priorität: 28.10.1996 DE 29618377 U
(71) Anmelder: Metallverarbeitung O. Klahr, 35687 Dillenburg (DE)
(72) Erfinder: Klahr, Ottfried, 35687 Dillenburg (DE)
(74) Vertreter: Müller, Gerd, Dipl.-Ing.

(57) **Zusammenfassung**

Bei einem Gas-Kombi-Bräter, insbesondere Wurstbräter, mit mindestens einem annähernd U-förmigen, zwei mit Gasaustrittsöffnungen (8) versehene Rohrschenkel (3, 4) aufweisenden Brenner (1), dem eine Gaszuführung (9) zugeordnet ist, wird die Leistung verbessert, wenn die Enden der Rohrschenkel (3, 4) gasdicht an ein stirnseitig verschlossenes Querrohr (7) angeschlossen sind.

## Beschreibung

Die Erfindung betrifft einen Gas-Kombi-Bräter, insbesondere Wurstbräter, mit mindestens einem annähernd U-förmigen, zwei mit Gasaustrittsöffnungen versehene Rohrschenkel aufweisenden Brenner, dem eine Gaszuführung zugeordnet ist.

Ein solcher zur Gaszufuhr zwischen den Rohrschenkeln außerdem ein von Gasaustrittsöffnungen freies Mittelrohr aufweisender Bräter ist durch die DE 42 13 197 C2 bekanntgeworden. Er besteht aus mehreren nebeneinander angeordneten, unabhängig voneinander zuschaltbaren U-förmigen Brennerrohren, wobei je zwei benachbarte Schenkel zweier Brennerrohre über ein beidseitig offenes Verbindungsrohr als Verbindungsbrücke miteinander in gasleitender Verbindung stehen. Benachbart zu Gasaustrittsöffnungen in den Schenkein befinden sich Öffnungen des Verbindungsrohres, das an wenigstens einer seiner beiden stirnseitigen Öffnungen an einem der beiden Schenkel der einander benachbarten Brennerrohre angeschweißt ist, die es folglich miteinander gasleitend verbindet. Die auf diese Weise erreichte gasleitende Verbindungsbrücke gewährleistet, daß das an einer ersten Brennstelle entzündete heiße Gas das an einer benachbarten Brennstelle ausströmende Gas selbsttätig entzündet, wenn diese Brennstelle zugeschaltet wird; es liegt somit ein sich von Brennstelle zu Brennstelle fortpflanzendes Entzünden vor. Wenngleich sich somit zwar ein betriebssicheres Entzünden aneinandergereihter Brenner erreichen läßt, so hat sich bei diesem bekannten Bräter als nachteilig jedoch die geringe Leistung gezeigt.

Der Erfindung liegt daher die Aufgabe zugrunde, mit verringertem Aufwand einen gattungsgemäßen Bräter mit höherer Leistung zu schaffen.

Diese Aufgabe wird erfindungsgemäß dadurch gelöst, daß die Schenkelenden gasdicht an ein stirnseitig verschlossenes Querrohr angeschlossen sind. Es wird auf diese Weise ein geschlossenes System, d.h. ein geschlossener Gas-Kreislauf und damit eine bessere, sauberere Verbrennung erreicht. Der Brenner läßt sich zudem mit nur einem Thermoelement sicher überwachen, so daß kein unverbrauchtes Gas aus dem Brenner austreten und eine Verpuffung bewirken kann; dies ist bei dem bekannten Gasbräter wegen der mit einem Thermoelement nur einseitigen Überwachung nicht möglich.

Eine bevorzugte Ausgestaltung der Erfindung sieht vor, daß ein zwischen den Rohrschenkeln angeordnetes Mittelrohr gasdicht an das Querrohr angeschlossen ist und vorzugsweise auch das Mittelrohr sowie das Querrohr mit Gasaustrittsöffnungen ausgebildet sind. Hiermit läßt sich eine optimierte Leistung erreichen, weil eine größere Brennstelle vorliegt, da auch das Quer- und das Mittelrohr zusätzlich als Brennerrohr dienen.

Wenn vorteilhaft der U-förmige Brenner einen dem biegetechnisch kleinstmöglichen Radius angenäherten Biegeradius aufweist, wird beim Aneinanderreihen von mehreren solcher Einzelbrenner zu einem entsprechend viele Brennstellen aufweisenden Gasbräter aufgrund der eng aneinanderliegenden Brennerschenkel ein ausreichender Zündüberschlag gewährleistet, um die mehrere Einzelbrenner aufweisende Brenneinheit mit - wie an sich bekannt - lediglich einem Zünder entzünden zu können. Abgesehen von dem Zündüberschlag von einem zum anderen benachbarten Rohrschenkel pflanzt sich hier die Zündung aber weiterhin auch durch die Gasaustrittsöffnungen der bei mehreren hintereinandergeschalteten Einzelbrennern unmittelbar aneinanderstoßenden Querrohre fort.

Weitere Einzelheiten und Vorteile der Erfindung ergeben sich aus den Ansprüchen und der nachfolgenden Beschreibung, in der Ausführungsbeispiele des Gegenstandes der Erfindung näher erläutert sind. Es zeigen:
- Fig. 1: in schematischer Draufsicht einen einen geschlossenen Gas-Kreislauf aufweisenden Einzelbrenner;
- Fig. 2: in schematischer Draufsicht eine Ausführung eines Gas-Kombi-Bräters mit mehreren aneinandergereihten Einzelbrennern; und
- Fig. 3: eine alternative Brennerausführung ohne Mittelrohr.

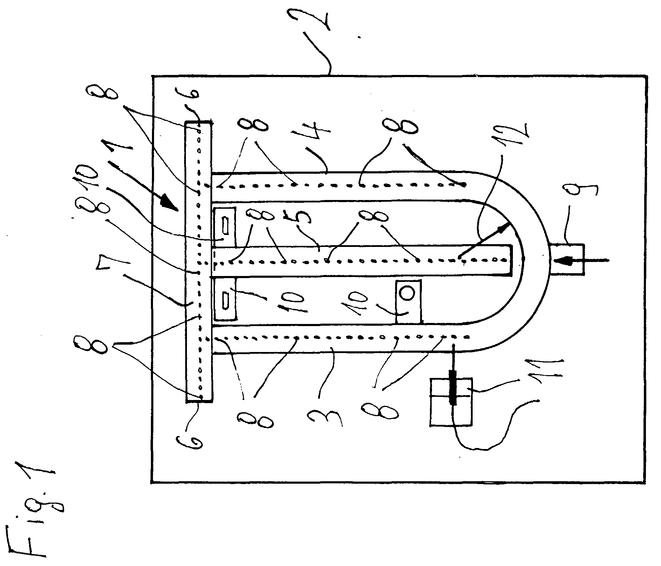

Der in Fig. 1 gezeigte Einzelbrenner 1 ist in einem Gehäuse 2 eines im einzelnen nicht dargestellten, hinlänglich bekannten Gas-Kombi-Bräters angeordnet. Der Brenner 1 besteht aus einem U-förmigen, d.h. zwei Rohrschenkel 3, 4 besitzenden Brennerrohr, einem Mittelrohr 5 und einem an seinen Stirnseiten 6 verschlossenen Querrohr 7. Das Mittelrohr 5 und die Rohrschenkel 3, 4 münden in bzw. sind gasdicht an das Querrohr 7 angeschlossen, das ebenso wie das Mittelrohr 5 mit auch in den Rohrschenkeln 3, 4 vorgesehenen Gasaustrittsöffnungen 8 versehen ist. Dem Mittelrohr 5 ist eine Gaszuführung 9, z.B. ein Gaseintrittshahn mit einem Einschaltknebel, zugeordnet. Zur Befestigung des Brenners 1 in dem Bräter bzw. an dem Brätergehäuse 2 dienen Rohrschellen 10. Nach dem Einschalten der Gaszufuhr wird der Brenner durch einen Piezo-Zünder 11 gezündet. Die gesamten Rohre des Brenners 1 stehen hierbei als Brennfläche zur Verfügung, so daß sich eine sehr große Leistung mit einer sehr sauberen Verbrennung in dem geschlossenen Gas-Kreislauf einstellt.

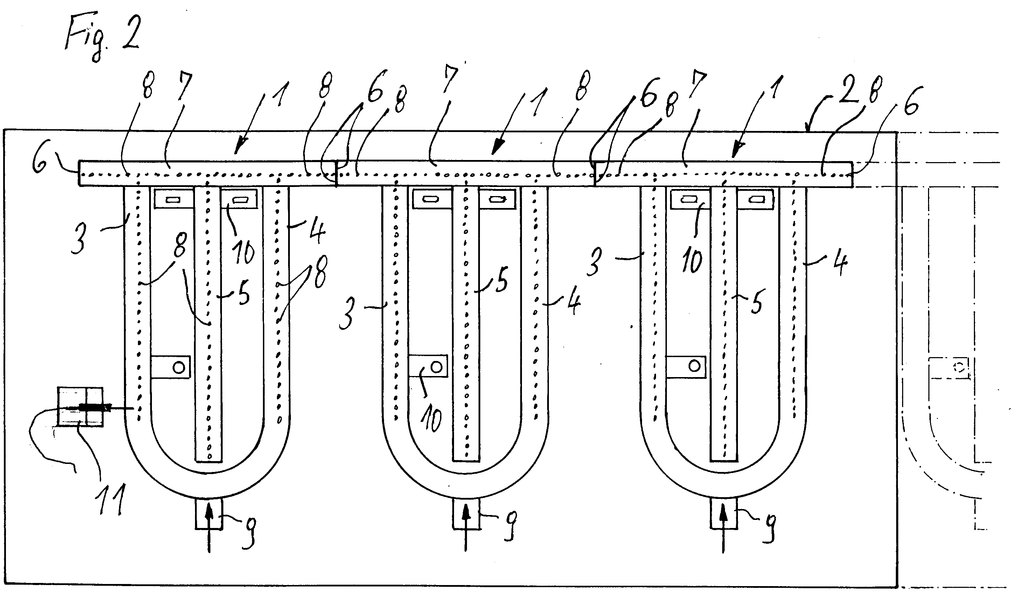

Bei der Gas-Bräter-Ausführung nach Fig. 2 sind drei der in Fig. 1 gezeigten Einzelbrenner 1 an- bzw. hintereinander geschaltet; wie in Fig. 2 rechts außen strichpunktiert angedeutet, ist es unbenommen, den drei in fetten Linien gezeichneten Einzelbrenner noch weiter zu ergänzen. Die Rohrschenkel 3, 4 der U-förmigen Brennerrohre sind mit einem von dem Durchmesser des U-förmigen Brennerrohres vorgegebenen kleinstmöglichen Biegeradius 12 (vgl. Fig. 1) bzw. diesem angenähert gebogen, so daß sich ein enger Abstand zwischen einerseits den Rohrschenkeln 3, 4 eines Einzelbrenners selbst und andererseits zwischen benachbarten Rohrschenkeln 3 bzw. 4 der hintereinander geschalteten Einzelbrenner 1 ergibt. Der enge Biegeradius 12 unterstützt, daß sich mit nur einem Piezo-Zünder 11 sämtliche Einzelbrenner 1 entzünden, da sich die Zündflamme von Einzelbrenner zu Einzelbrenner fortpflanzt, vorausgesetzt natürlich, daß diese zugeschaltet sind. Abgesehen davon wird das Fortpflanzen der Zündflamme aber grundsätzlich schon dadurch erreicht, daß die Querrohre 7 mit ihren verschlossenen Stirnseiten aneinanderstoßend angeordnet sind, und da die Querrohre 7 in dem geschlossenen Gas-Kreislauf ebenfalls mit Gasaustrittsöffnungen 8 versehen sind, von denen sich die letzten in unmittelbarer Nähe der verschlossenen Stirnseiten 6 befinden, stellt sich ein Zündüberschlag auch schon dort ein, d.h. nach dem Entzünden des ersten Einzelbrenners werden in der Folge alle hintereinander geschalteten Einzelbrenner sicher gezündet.

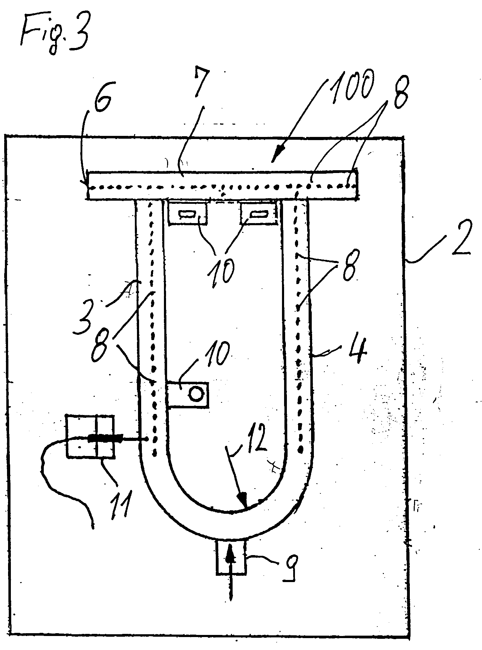

Das zuvor Gesagte gilt gleichermaßen für den in Fig. 3 gezeigten Brenner 100, der abweichend von der vorbeschriebenen Ausführung kein Mittenrohr aufweist. Von der auch hier gasdicht mit dem Rohrbogen verbundenen Gaszuführung 9 verteilt sich das gas folglich nur in die Rohrschenkel 3, 4 und das Querrohr 7. Statt des dargestellten einen Brenners 100 lassen sich wiederum mehrere dieser Brenner hinter- bzw. aneinanderschalten, ähnlich der Anordnung gemäß Fig. 2.

## Patentansprüche

1. Gas-Kombi-Bräter, insbesondere Wurstbräter, mit mindestens einem annähernd U-förmigen, zwei mit Gasaustrittsöffnungen versehene Rohrschenkel aufweisenden Brenner, dem eine Gaszuführung zugeordnet ist.
**dadurch gekennzeichnet**,
daß die Enden der Rohrschenkel (3, 4) gasdicht an ein stirnseitig verschlossenes Querrohr (7) angeschlossen sind.

2. Gas-Kombi-Bräter nach Anspruch 1,
**dadurch gekennzeichnet**,
daß ein zwischen den Rohrschenkeln (3, 4) angeordnetes Mittelrohr (5) gasdicht an das Querrohr (7) angeschlossen ist.

3. Gas-Kombi-Bräter nach den Ansprüchen 1 und 2,
**dadurch gekennzeichnet**,
daß auch das Mittelrohr (5) und das Querrohr (7) mit Gasaustrittsöffnungen (8) ausgebildet isind.

4. Gas-Kombi-Bräter nach einem der Ansprüche 1 bis 3,
**dadurch gekennzeichnet**,
daß der U-förmige Brenner (1, 100) einen dem biegetechnisch kleinstmöglichen Radius angenäherten Biegeradius (12) aufweist.
